(19) Europäisches Patentamt
European Patent Office
Office européen des brevets

(11) **EP 3 898 803 B1**

(12) **EUROPEAN PATENT SPECIFICATION**

(45) Date of publication and mention
of the grant of the patent:
**16.10.2024   Bulletin 2024/42**

(21) Application number: **19818145.5**

(22) Date of filing: **17.12.2019**

(51) International Patent Classification (IPC):
**C08K 3/04** *(2006.01)*      **C08K 3/26** *(2006.01)*
**C08K 3/30** *(2006.01)*      **C08K 3/34** *(2006.01)*
**C08K 3/36** *(2006.01)*      **C08K 3/40** *(2006.01)*
**C08K 3/013** *(2018.01)*     **A47G 27/02** *(2006.01)*
**D06N 7/00** *(2006.01)*      **C08L 23/18** *(2006.01)*
**C08K 3/22** *(2006.01)*

(52) Cooperative Patent Classification (CPC):
(C-Sets available)
**C08K 3/013; C08K 3/04; C08K 3/26; C08K 3/30;**
**C08K 3/34; C08K 3/36; C08K 3/40; D06N 7/0076;**
C08K 2003/2224; C08K 2003/262; C08K 2003/265;
C08K 2003/267; C08K 2003/3045; C08K 2201/005;
Y02P 70/62                              (Cont.)

(86) International application number:
**PCT/EP2019/085694**

(87) International publication number:
**WO 2020/127298 (25.06.2020 Gazette 2020/26)**

(54) **POLYOLEFIN COMPOSITION FOR CARPET BACKING**

POLYOLEFINZUSAMMENSETZUNG FÜR TEPPICHRÜCKBESCHICHTUNG

COMPOSITION DE POLYOLÉFINE POUR SUPPORT DE TAPIS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:   **20.12.2018   EP 18214541**

(43) Date of publication of application:
**27.10.2021   Bulletin 2021/43**

(73) Proprietor: **Basell Poliolefine Italia S.r.l.**
**20121 Milano (IT)**

(72) Inventors:
• **MUSACCHI, Gianluca**
  **44122 Ferrara (IT)**
• **MARCHINI, Roberta**
  **44122 Ferrara (IT)**
• **SPATARO, Stefano**
  **44122 Ferrara (IT)**
• **PASQUALI, Stefano**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A2- 0 475 434        WO-A1-2010/069998**
**JP-A- 2005 112 988**

• **DATABASE CA [online] CHEMICAL ABSTRACTS**
**SERVICE, COLUMBUS, OHIO, US; 29 April 2005**
**(2005-04-29), SERA, MASANORI ET AL: "Butene**
**polymer composite materials for interior**
**materials, wallpaper laminated therewith, and its**
**manufacture", XP002792376, retrieved from STN**
**Database accession no. 2005:368226**

EP 3 898 803 B1

(52) Cooperative Patent Classification (CPC): (Cont.)

C-Sets
**C08K 3/013, C08L 23/18;**
**C08K 3/04, C08L 23/18;**
**C08K 3/26, C08L 23/18;**
**C08K 3/30, C08L 23/18;**
**C08K 3/34, C08L 23/18;**
**C08K 3/36, C08L 23/18;**
**C08K 3/40, C08L 23/18**

C-Sets

**Description**

FIELD OF THE INVENTION

The present disclosure relates to a polyolefin-based composition for carpet backing comprising butene-1 copolymers having high melt flow rate and an inorganic filler.

BACKGROUND OF THE INVENTION

The underside of carpets generally comprises several layers having the function of securing the tufts and of giving the carpet additional strength and dimensional stability. Most carpets have a double backing: the primary backing where the yarn is fixed, and a secondary backing which provides the required dimensional stability. The primary and secondary baking are glued by latex, emulsions of synthetic rubbers or hot melt adhesive compositions.

Highly flowable compositions containing ex-reactor butene-1 copolymers having MFR in the range from 200 to 1,500 g/10min are known from the International patent application WO2015/074830. Said compositions are suitable for gluing the tuft to the primary carpet backing in tufted or needle-punched carpets.

The carpet secondary backing can be made from different materials, such as compositions comprising bitumen and inorganic filler as described in the US patent 5,929,145. Said carpets have limited recyclability at the end of their service life due to difficult delamination of the bitumen-containing layer.

It is also known in the art, in particular from the US patent 5,416,151, that butene-1 polymer compositions containing butene-1 polymers having melt flow rate values up to 150 g/10min., a large amount of filler and hydrocarbon oils can be used as backing materials of carpets to substitute bitumen-based compositions. However, the presence of hydrocarbon oils in the composition may compromise the elasticity of the backing layer and oil blooming may alter the aesthetic appearance of the carpet.

In this context, it is still felt the need of polyolefin-based compositions with sufficiently high fluidity and good elastic properties at room temperature, which can be used in carpet backing.

SUMMARY OF THE INVENTION

The Applicant has now found a polyolefin composition having high melt flow rate and good elastic properties.

The filled polyolefin composition of the present disclosure comprises:

(A) a copolymer of butene-1 with at least one comonomer selected from the group consisting of ethylene, propylene, C5-C10 alpha-olefins and mixtures thereof, having copolymerized comonomer content of 0.5-5.0 wt.%, Melt Flow Rate (MFR) values measured according to ISO 1133 (190°C, 2.16kg) of from 400 to 2,700 g/10min, a molecular weight distribution (Mw/Mn) lower than 4, X-ray crystallinity comprised in the range 25-60%, and
(B) up to 80 wt.% of at least one inorganic filler,

wherein the amounts of (A) and (B) are referred to the total weight of (A) + (B).

The polyolefin composition of the instant disclosure are also endowed with a good balance between crystallinity, viscosity and adhesive properties.

The present disclosure refers also to a method of manufacturing a carpet comprising a step of applying to the underside of a primary carpet backing at least one layer comprising the polyolefin composition as described above.

In a further aspect, the present disclosure refers also to a carpet comprising at least one backing layer comprising the polyolefin composition as described above.

BRIEF DESCRIPTION OF THE DRAWINGS

The claimed subject matter may be understood by reference to the following description taken in conjunction with the accompanying figures in which:

FIG. 1 illustrates the variation of viscoelastic properties (E', E" and Tan $\delta$) of the butene-1 copolymer with the temperature measured by DMTA.
FIG. 2-4 illustrates the variation of the viscoelastic properties of the polyolefin compositions of examples 1-3 plotted as a function of temperature and measured according to the DMTA Method.

## DETAILED DESCRIPTION OF THE INVENTION

In the context of the present disclosure, the term "room temperature" indicates a temperature of 25±2°C measured at 50% of relative humidity.

An object of the present disclosure is a filled polyolefin composition comprising:

(A) a copolymer of butene-1 with at least one comonomer selected from the group consisting of ethylene, propylene, C5-C10 alpha-olefins and mixtures thereof, having copolymerized comonomer content of 0.5-5.0 wt.%, Melt Flow Rate (MFR) values measured according to ISO 1133 (190°C, 2.16kg) of from 400 to 2,700 g/10min, a molecular weight distribution (Mw/Mn) lower than 4, X-ray crystallinity comprised in the range 25-60%, and
(B) up to 80 wt.% of at least one inorganic filler,

wherein the amounts of (A) and (B) are referred to the total weight of (A) + (B), the total weight of (A)+(B) amounting to 100%.

In one embodiment, the butene-1 copolymer component (A) may have a MFR measured according to ISO 1133 (190°C, 2.16kg) of from 600 to 2,500 g/10 min, preferably of from 800 to 2,000 g/10min.

In one embodiment, the butene-1 copolymer component (A) may have a MFR measured according to ISO 1133 (190°C, 2.16kg) of from 1,000 to 1,600 g/lOmin.

The at least one comonomer is selected from ethylene, propylene, C5-C10 alpha-olefins and mixtures thereof.

Preferably said at least one comonomer can be selected from among ethylene, propylene, hexene-1, octene-1 and mixture thereof.

More preferably the at least one comonomer can be ethylene.

In one embodiment, the butene-1 copolymer component (A) may have a copolymerized comonomer content, in particular a copolymerized ethylene content, of 0.5-3.0 wt.%, preferably of 0.7-2.0 wt.%, more preferably of 0.7-1.5 wt.%.

In one further embodiment, the butene-1 component (A) may be a butene-1 copolymer composition comprising:

(A1) a butene-1 homopolymer or a copolymer of butene-1 with at least one comonomer selected from ethylene, propylene, C5-C10 alpha-olefins and mixtures thereof, having a copolymerized comonomer content ($C_{A1}$) of up to 3 wt.%, in particular from 1 wt.% to 3 wt.% ;
(A2) a copolymer of butene-1 with at least one comonomer selected from ethylene, propylene, C5-C10 alpha-olefins and mixtures thereof, having a copolymerized comonomer content ($C_{A2}$) of 3-10 wt.%;
said composition having a total copolymerized comonomer content of 0.5-5.0 wt.% referred to the sum of (A1) + (A2) and preferably a content of fraction soluble in xylene at 0°C equal to or less than 60 wt.%, determined on the total weight of (A1)+(A2).

The relative amount of component (A1) and (A2) may range from 10% to 40% by weight, in particular from 15% to 35% by weight of (A1) and from 90% to 60% by weight, in particular from 85% to 65% by weight of (A2), said amounts being referred to the sum of (A1)+(A2).

Examples of said butene-1 copolymer composition are described in the patent application WO2018/007280,

Preferably, the butene-1 copolymer component (A) may have at least one of the following additional features:

(a) a molecular weight distribution (Mw/Mn) lower than 4, preferably lower than 3; more preferably lower than 2.5, the lower limit being of 1.5 in all cases; and/or
(b) a weight average molecular weight Mw of from 30,000 to 140,000, preferably of from 30,000 to 80,000; and/or
(c) melting point (TmII) lower than 110°C, preferably lower than 100°C, more preferably lower than 90°C; and/or
(d) melting point (TmII) higher than 80°C; and/or
(e) rotational (Brookfield) viscosity at 180°C (shear rate 100 s-1) of from 5,000 to 50,000 mPa.sec, in particular from 8,000 to 20,000 mPa.sec.

In one embodiment, the butene-1 copolymer (A) may have all the additional features (a)-(f).

Preferably, the butene-1 copolymer component (A) may also have at least one of the following additional features:

(g) glass transition temperature (Tg) in the range from - 40°C to - 10°C, preferably from -30°C to -10°C; and/or
(h) storage modulus (E') at 23°C equal to or higher than 300 MPa,

wherein the glass transition temperature and the storage modulus are measured by Dynamic Mechanical Thermal Analysis (DMTA).

More preferably, the butene-1 copolymer component (A) may have both the additional feature (g) and (h).

Optionally, the butene-1 copolymer component (A) may additionally have at least one of the further following features:

(i) intrinsic viscosity (IV) measured in tetrahydronaphtalene (THN) at 135°C equal to or lower than 0.8 dl/g, preferably comprised between 0.2 and 0.6 dl/g; and/or

(ii) a density of higher than 0.885-0.925 $g/cm^3$, in particular of 0.890-0.920 $g/cm^3$.

In one embodiment, the butene-1 copolymer (A) may have both the additional features (i) and (ii).

In a further embodiment, the butene-1 copolymer (A) may have all the additional features (a)-(h) and also all the additional features (i) and (ii).

The butene-1 copolymer component (A) can be obtained by copolymerizing butene-1 and the at least one comonomer in the presence of a catalyst system obtainable by contacting:

- a stereorigid metallocene compound;
- an alumoxane or a compound capable of forming an alkyl metallocene cation; and, optionally,
- an organo aluminum compound.

The patent applications WO2004/099269, WO2006/045687 and WO2018/007280, describe a process and a catalysts system suitable for producing the butene-1 copolymer component (A).

The butene-1 copolymer component (A) can be obtained by a polymerization process carried out in one or more reactors connected in series. In the latter case, the catalyst can be added in the first reactor only, or in more than one reactor. As explained in WO2004/099269, the polymerization process can be carried out in the liquid phase, optionally in the presence of an inert hydrocarbon solvent, or in the gas phase, using fluidized bed or mechanically agitated gas phase reactors. Preferably, the polymerization process is carried out by using liquid butene-1 as polymerization medium. The polymerization temperature ranges from 20°C to 150°C, preferably from 50°C to 90°C, more preferably it is from 65°C to 82°C.

As explained in WO2006/045687, hydrogen can be advantageously used to regulate the molecular weight of butene-1 copolymers. The concentration of hydrogen during the polymerization reaction carried out in the liquid phase is higher than 1800 molar ppm and lower than 6000 molar ppm, preferably it ranges from 2000 molar ppm to 6000 molar ppm.

Butene-1 copolymers having low melting point can be obtained by properly selecting the copolymerized comonomer content, in particular ethylene content. Thus, the butene-1 copolymer component (A) can be obtained with a polymerization process wherein the (total) amount of the comonomer, in particular of ethylene, in the liquid phase ranges from 0.1wt.% to 8wt.%, preferably from 0.2 wt.% to 6 wt.%, with respect to the total weight of butene-1 monomer present in the polymerization reactor.

When the butene-1 copolymer (A) is a butene-1 copolymer composition comprising the component (A1) and (A2) as described above, the polymerization process comprises at least two polymerization stages, carried out in two or more reactors connected in series. When component (A1) is a copolymer, for the preparation of component (A1) the amount of comonomer in the liquid phase can be from 0.1 wt.% to 1.2 wt.%, while it can be from 1 wt.% to 8 wt.% for the preparation of component (A2).

In one embodiment, the at least one inorganic filler (B) can be selected from the group consisting of carbonates of alkali metals or alkaline-earth metals, sulfates of alkali metals or alkaline-earth metals, hydroxides of alkali metals or alkaline-earth metals, silicate minerals, synthetic silica, synthetic zeolites, glass, carbon black, inorganic pigments, and mixtures thereof.

The carbonates, sulfates and/or hydroxides of alkali metals and of alkaline-earth metals can be of natural or synthetic origin.

In a preferred embodiment, the at least one inorganic filler (B) can be selected from the group consisting of calcium carbonate, magnesium carbonate, calcium sulfate, barium sulfate, magnesium hydroxides and mixtures thereof.

More preferably, the at least one inorganic filler (B) can be calcium carbonate.

In one embodiment, the at least one inorganic filler (B) can have a particle size distribution in which the d(90) value is equal to or lower than 300μm.

Preferably, the inorganic filler (B) can have a particle size distribution in which the d(10) value is from 0.5 to 10 μm, in particular from 0.5 to 3 μm, the d(50) value is from 5 to 30 μm and d(90) value is from 30 to 300 μm.

In one embodiment, the at least one inorganic filler (B) may be calcium carbonate having a particle size distribution ad described above.

In one embodiment, the filled polyolefin composition may comprise from 10 to 80 wt.%, preferably from 20 to 75 wt.%, of at the least one inorganic filler (B). In this embodiment, the filled polyolefin composition may comprise from 20 to 90 wt.%, preferably from 25 to 80 wt.% of the butene-1 copolymer (A). The composition of this embodiment is particularly, but not exclusively, suitable for forming the secondary backing of carpets.

In addition to the above-mentioned components (A) and (B), the filled polyolefin composition of the present disclosure can further optionally comprise additives selected from antioxidants, UV stabilizers, aging protection agents, nucleating agents and mixtures thereof. Preferably, the total amount of the additives may be from 0.01 to 1 wt.%, with respect to the total weight of the filled polyolefin composition.

The filled polyolefin composition of the present disclosure may be further characterized in that it does not comprise hydrocarbon oils.

The filled polyolefin composition of the present disclosure can be prepared by known methods and equipment, such as blending of the component in the molten state in a single- or twin screw extruder. The inorganic component (B) can be added to the butene-1 copolymer in powder form or, preferably, as a masterbatch.

Accordingly, the filled polyolefin composition of the present disclosure may comprise the component (A) and a masterbatch composition comprising the at least one inorganic filler (B), wherein the amount of the masterbatch composition in the filled polyolefin composition secures the presence of up to 80 wt.% of the inorganic filler (B) in the filled polyolefin composition.

The filled polyolefin composition described above is particularly suitable for the use in carpet backing.

The butene-1 copolymer (A) is endowed with good elastic properties at room temperature, resulting in a carpet backing having good resistance to high mechanical loads.

Accordingly, a further object of the present disclosure is a method of manufacturing a carpet comprising a step of applying to the underside of a primary carpet backing at least one layer comprising the filled polyolefin composition as described above.

The method may be preferably for the manufacturing of a carpet selected from the group consisting of tufted, needle-punched, woven, knotted and bonded carpets, preferably for the manufacturing of a tufted carpet.

The carpets described above comprise a primary backing, where the face yarn is fixed, a backcoat material adhered to, or coated onto, the primary backing which binds, or anchors, the yarn to the primary backing and optionally, but preferably, at least one secondary backing adhered to the backcoat material, which provides dimensional stability to the carpet. A carpet comprising a plurality of secondary backings further comprise adhesive layers to adhere the secondary layers.

The carpet, preferably but not exclusively tufted carpet, may have a unitary backing, which is a heavy application of a backcoat material applied to the carpet's primary backing both to fix the yarns and provide dimensional stability, without using a secondary backing.

The filled polyolefin composition of the present disclosure can be comprised in at least one layer selected between the backcoat material and the at least one secondary backing.

The step of applying the to the underside of a primary carpet backing at least one layer comprising the filled polyolefin composition can be carried out using conventional application techniques, such as extrusion coating, roller coating or lamination, depending on the thickness and viscosity of the layer comprising the filled polyolefin composition.

A further object of the present disclosure is a carpet comprising at least one backing layer comprising the filled polyolefin composition as described above.

The carpet may preferably be selected from the group consisting of tufted, needle-punched, woven, knitted and bonded carpets, preferably it may be a tufted carpet.

In one embodiment the carpet may be a tufted carpet tile.

The carpet of the present disclosure may be further characterized in that it does not comprise bitumen.

In one embodiment, the at least one backing layer has thickness ranging from 0.1 to 5.0 mm, preferably from 0.1 to 3.0 mm.

In one preferred embodiment, the carpet may comprise:

(i) a primary baking;
(ii) a backcoat material adhered on the backside of the primary backing; and
(iii) optionally, one or more secondary backings,

wherein at least one selected among the backcoat material (ii) and the one or more secondary backings (iii) comprises the filled polyolefin composition as described above.

The primary backing (i) comprises a yarn protruding from the front side of the primary backing and may be made, or comprise, a woven or non-woven fabric comprising natural or synthetic fibers selected among jute, wool, rayon, polyamides, polyesters, propylene polymers, ethylene polymers and mixtures thereof.

Alternatively, the primary backing (i) may be a film comprising a polymer material selected from the group consisting of propylene polymers, ethylene polymers and mixtures thereof.

The backcoat material (ii) may comprise the filled polyolefin composition of the present disclosure. In this embodiment, the filled polyolefin composition assists in binding the yarn to the primary backing (i) and also provides stiffness to the carpet.

The layer comprising the backcoat material (ii) comprising the filled polyolefin composition may have thickness ranging from 0.2 to 5 mm, preferably from 0.2 to 3 mm.

Alternatively, the backcoat material (ii) may comprise an adhesive material selected among latex, natural or synthetic rubber, eg. styrene-butadiene rubber, hot melt adhesives, the butene-1 copolymer component (A) of the filled polyolefin composition of the present disclosure and mixtures thereof.

In one preferred embodiment, the backcoat material (ii) may comprise latex.

One or more of the secondary backing layers (iii) may comprise materials used in the art in carpet secondary backing, such as: woven or non-woven fabrics comprising natural fibers selected among jute, wool, rayon and mixtures thereof; woven or non-woven fabrics comprising synthetic fibers selected among polyamides, polyesters, propylene polymers, ethylene polymers and mixtures thereof; films or foams comprising olefin polymers, preferably propylene polymers, ethylene polymers, polyurethane, latex and mixtures thereof.

One or more of the secondary backing layers (iii) may comprise the filled polyolefin composition of the present disclosure.

In a first embodiment, the carpet may comprise:

(i) a primary backing;
(ii) a backcoat material adhered on the backside of the primary backing comprising at least one adhesive material selected among latex, the filled polyolefin composition as described above or the butene-1 copolymer component (A) of the filled polyolefin composition described above; and
(iii) one or more secondary backing layers,

wherein at least one of the secondary backing layers (iii) comprises the filled polyolefin composition as described above.

In a further embodiment, the carpet may comprise:

(i) a primary backing; and
(ii) a backcoat material adhered on the backside of the primary backing comprising the filled polyolefin composition as described above.

The carpet of this further embodiment is a carpet having a unitary backing.

The carpet of the present disclosure is endowed with a favorable balance of properties: the backcoat material (ii), and optionally the one or more secondary backing layers (iii), are strongly fixed to the primary backing, so that no delamination problems arises during the service life of the carpet. At the same time said layers delaminate easily enough from the primary backing (i), thereby improving the recyclability of the carpet at the end of its service life, if compared to carpets comprising bituminous secondary backings.

The carpet of the present disclosure is also endowed with high resistance to load, excellent dimensional stability and good adhesion to the floor, preventing wrinkling and/or buckling during the service life of the carpet.

The following examples are illustrative only, and are not intended to limit the scope of the invention in any manner whatsoever.

EXAMPLES

The following analytical methods are used to determine the properties reported in the description and in the examples.

**Melt flow rate (MFR)** was measured according to ISO 1133-2:2011 (190°C, 2.16kg, except where different load and temperatures are specified).

**Comonomer content (wt.%)** measured via IR spectroscopy.

The spectrum of a pressed film of the polymer was recorded in absorbance vs. wavenumbers ($cm^{-1}$). The following measurements were used to calculate the ethylene content: a) area (At) of the combination absorption bands between 4482 and 3950 $cm^{-1}$ which is used for spectrometric normalization of film thickness;

b) factor of subtraction ($FCR_{C2}$) of the digital subtraction between the spectrum of the polymer sample and the absorption band due to the sequences BEE and BEB (B: 1-butene units, E: ethylene units) of the methylenic groups ($CH_2$ rocking vibration);
c) Area ($A_{C2,block}$) of the residual band after subtraction of the $C_2PB$ spectrum. It comes from the sequences EEE of the methylenic groups ($CH_2$ rocking vibration).

APPARATUS

A Fourier Transform Infrared spectrometer (FTIR) was used, which is capable of providing the spectroscopic measurements above reported. A hydraulic press with platens heatable to 200°C (Carver or equivalent) was used.

METHOD

Calibration of (BEB + BEE) sequences

A calibration straight line is obtained by plotting %(BEB + BEE)wt vs. $FCR_{C2}/A_t$. The slope Gr and the intercept Lr are calculated from a linear regression.

Calibration of EEE sequences

A calibration straight line is obtained by plotting %(EEE)wt vs. $A_{C2,block}/A_t$. The slope $G_H$ and the intercept $I_H$ are calculated from a linear regression.

Sample preparation

Using a hydraulic press, a thick sheet is obtained by pressing about g 1.5 of sample between two aluminum foils. If homogeneity is in question, a minimum of two pressing operations are recommended. A small portion is cut from this sheet to mold a film. Recommended film thickness ranges between 0.1-0.3 mm. The pressing temperature is 140 $\pm$ 10 °C. A crystalline phase modification takes place with time, therefore it is recommended to collect the IR spectrum of the sample film as soon as it is molded.

Procedure

The instrument data acquisition parameters are as follows:

Purge time: 30 seconds minimum.
Collect time: 3 minutes minimum.
Apodization: Happ-Genzel.
Resolution: 2 cm$^{-1}$.
Collect the IR spectrum of the sample vs. an air background.

CALCULATION

Calculate the concentration by weight of the BEE + BEB sequences of ethylene units:

$$\%(BEE + BEB)wt = Gr\frac{FCR_{C2}}{A_t} + I_r$$

Calculate the residual area (AC2,block) after the subtraction described above, using a baseline between the shoulders of the residual band.
Calculate the concentration by weight of the EEE sequences of ethylene units:

$$\%(EEE)wt = G_H\frac{A_{C2,block}}{A_t} + I_H$$

Calculate the total amount of ethylene percent by weight:

$$\% C2wt = [\%(BEE + BEB)wt + \%(EEE)wt]$$

**Mw/Mn determination.** Measured by way of Gel Permeation Chromatography (GPC) in 1,2,4-trichlorobenzene (TCB). Molecular weight parameters (Mn, Mw, Mz) and molecular weight distributions Mw/Mn for all the samples were measured by using a GPC-IR apparatus by PolymerChar, which was equipped with a column set of four PLgel Olexis mixed-bed (Polymer Laboratories) and an IR5 infrared detector (PolymerChar). The dimensions of the columns were $300 \times 7.5$ mm and their particle size was 13 $\mu$m. The mobile phase flow rate was kept at 1.0 mL/min. All the measurements were carried out at 150 °C. Solution concentrations were 2.0 mg/mL (at 150 °C) and 0.3 g/L of 2,6-diterbuthyl-p-chresole were added to prevent degradation. For GPC calculation, a universal calibration curve was obtained using 12 polystyrene (PS) standard samples supplied by PolymerChar (peak molecular weights ranging from 266 to 1220000). A third-order polynomial fit was used for interpolate the experimental data and obtain the relevant calibration curve. Data acquisition and processing was done by using Empower 3 (Waters). The Mark-Houwink relationship was used to determine the molecular weight distribution and the relevant average molecular weights: the K values were KPS = 1.21 $\times$ 10$^{-4}$ dL/g and KPB = 1.78 $\times$ 10$^{-4}$ dL/g for PS and polybutene (PB) respectively, while the Mark-Houwink exponents $\alpha$ = 0.706 for PS and $\alpha$ = 0.725 for PB were used.

For butene/ethylene copolymers, as far as the data evaluation is concerned, it was assumed for each sample that the composition was constant in the whole range of molecular weight and the K value of the Mark-Houwink relationship was calculated using a linear combination as reported below: $K_{EB} = x_E K_{PE} + x_B K_{PB}$

where $K_{EB}$ is the constant of the copolymer, $K_{PE}$ (4.06 $\times$ 10$^{-4}$, dL/g) and $K_{PB}$ (1.78 $\times$ 10$^{-4}$ dL/g) are the constants of polyethylene (PE) and PB, $x_E$ and $x_B$ are the ethylene and the butene weight relative amount with $x_E + x_B$ = 1. The Mark-Houwink exponents $\alpha$ = 0.725 was used for all the butene/ethylene copolymers independently on their composition. End processing data treatment was fixed for all samples to include fractions up at 1000 in terms of molecular weight equivalent. Fractions below 1000 were investigated via GC.

**The melting point** was determined by Differential Scanning Calorimetry (D.S.C.) on a Perkin Elmer DSC-7 instrument. The melting temperatures of butene-1 copolymers and of the HMA compositions were determined according to the following method:

- TmII (melting temperature/s measured in second heating run): a weighted sample (5-10 mg) obtained from the polymerization (or a weighted sample of the HMA composition) was sealed into aluminium pans and heated at 200°C with a scanning speed corresponding to 10°C/minute. The sample was kept at 200°C for 5 minutes to allow a complete melting of all the crystallites thus cancelling the thermal history of the sample. Successively, after cooling to -20°C with a scanning speed corresponding to 10°C/minute, the peak temperature was taken as crystallization temperature (Tc). After standing 5 minutes at - 20°C, the sample was heated for the second time at 200°C with a scanning speed corresponding to 10°C/min. In this second heating run, the peak temperature/s measured were marked as (TmII) and the area under the peak (or peaks) as global melting enthalpy (DH TmII).
- The melting enthalpy and the melting temperature were measured also after aging (without cancelling the thermal history) as follows by using the Differential Scanning Calorimetry (D.S.C.) on an Perkin Elmer DSC-7 instrument. A weighted sample (5-10 mg) obtained from the polymerization (or a weighted sample of the HMA composition) was sealed into aluminium pans and heated at 200°C with a scanning speed corresponding to 10°C/minute. The sample was kept at 200°C for 5 minutes to allow a complete melting of all the crystallites. The sample was then stored for 10 days at room temperature. After 10 days the sample was subjected to DSC, it was cooled to -20°C, and then it was heated at 200°C with a scanning speed corresponding to 10°C/min. In this heating run, the peak temperature (or temperatures when more than one peack was present) were recorded as the melting temperatures (TmI), and the area under the peak (or peaks) as global melting enthalpy after 10 days (DH TmI).

**Glass transition temperature (Tg) and Storage Modulus (E') via Dynamic Mechanical Thermal Analysis (DMTA).** Molded specimens (conditioned after molding for 40h at 23°$\pm$2°C and 50% relative humidity) of 80 mm by 10 mm by 1 mm are fixed to the DMTA machine for tensile stress. The frequency of the tension and relies of the sample is fixed at 1 Hz. The DMTA translates the elastic response of the specimen starting from -100°C to 130°C, using a heating rate of 2°C/min. In this way it is possible to plot the elastic response versus temperature. The elastic modulus for a viscoelastic material is defined as E=E'+iE". The DMTA can split the two components E' and E" by their resonance and plot E' vs temperature and E/E" = tan ($\delta$) vs temperature. The glass transition temperature Tg is assumed to be the temperature at the maximum of the curve E/E" = tan ($\delta$) vs temperature.

**Rotational (Brookfield) viscosity** is measured at 180°C and a deformation rate of and 100 s-1, using a RheolabQC instrument, which is a rotational rheometer, consisting of a high-precision encoder and a dynamic EC motor. It is possible to select between controlled shear rate (CR) and controlled shear stress (CS) test settings. It is suitable for investigations on the mixing and stirring behavior of emulsions and dispersions and pastes using concentric cylinder systems, double gap systems and different vane geometries and spindles. During the test, the sample is subjected at a deformation rate sweep from 1 s-1 to 1000 s-1. The torque is measured for each deformation rate and the corresponding viscosity is calculated by the instrument software.

**Crystallinity** was measured by X-Ray diffraction according to the following method: The instrument used to measure crystallinity is a X-ray Diffraction Powder Diffractometer (XDPD) that uses the Cu-K$\alpha$1 radiation with fixed slits and able to collect spectra between diffraction angle 2Θ = 5° and 2Θ = 35° with step of 0.1° every 6 seconds.

The samples are diskettes of about 1.5-2.5 mm of thickness and 2.5-4.0 cm of diameter made by compression molding. The diskettes are aged at 23°C for 96 hours.

After this preparation the specimen is inserted in the XDPD sample holder. Set the XRPD instrument in order to collect the XRPD spectrum of the sample from diffraction angle 2Θ = 5° to 2Θ = 35° with step of 0.1° by using counting time of 6 seconds, at the end the final spectrum is collected.

Defining Ta as the total area between the spectrum profile and the baseline expressed in counts/sec·2Θ.; and Aa as the total amorphous area expressed in counts/sec·2Θ. Ca is total crystalline area expressed in counts/sec·2Θ.

The spectrum or diffraction pattern is analyzed in the following steps:

1) define a suitable linear baseline for the whole spectrum and calculate the total area (Ta) between the spectrum profile and the baseline;
2) define a suitable amorphous profile, along the whole spectrum, that separate, the amorphous regions from the crystalline ones according to the two phase model;
3) calculate the amorphous area (Aa) as the area between the amorphous profile and the baseline;
4) calculate the crystalline area (Ca) as the area between the spectrum profile and the amorphous profile as Ca = Ta- Aa; and
5) Calculate the degree of crystallinity of the sample using the following formula:

$$\%Cr = 100 \text{ x } Ca \text{ / } Ta$$

**Intrinsic viscosity:** determined in tetrahydronaphthalene at 135 °C according to norm ASTM D 2857 - 16.

**Density:** Determined according to norm ISO 1183-1:2012, method A, Part 1: immersion method. Test specimens were obtained by compression moulded plaques. Density is measured after 10 days conditioning.

**Fractions soluble and insoluble in xylene at 0°C:** 2.5 g of polymer composition and 250 cm$^3$ of o-xylene are introduced in a glass flask equipped with a refrigerator and a magnetic stirrer. The temperature is raised in 30 minutes up to the boiling point of the solvent. The so obtained clear solution is then kept under reflux and stirring for further 30 minutes. The closed flask is then cooled to 100°C in air for 10 to 15 minute under stirring and then kept for 30 minutes in thermostatic water bath at 0°C for 60 minutes as well . The so formed solid is filtered on quick filtering paper at 0°C. 100 cm$^3$ of the filtered liquid is poured in a previously weighed aluminum container which is heated on a heating plate under nitrogen flow, to remove the solvent by evaporation. Thus, the fraction (percent by weight) of polymer soluble in xylene (XS) is calculated from the average weight of the residues. The polymer fraction insoluble in o-xylene at 0°C (XI) is calculated as: XI (%) = 100 - XS (%).

**Flexural modulus** was measured according to ISO 178:2010. Specimens for flexural test were cut from compression molded plaques pressed at 200°C and aged via autoclave at RT for 10min at 2kbar. Specimens thickness was of 4mm.

**Particle size distribution** is measured by laser diffraction according to ISO 13320:2009.

**Preparation of catalyst components:** Dimethylsilyl{(2,4,7-trimethyl-1-indenyl)-7-(2,5-dimethyl-cyclopenta[1,2-b:4,3-b']-dithiophene)} zirconium dichloride (metallocene A-1) was prepared according to Example 32 of WO01/47939.

**Preparation of the catalytic solution:** Under nitrogen atmosphere, 6400 g of a 33 g/L solution of TIBA in isododecane and 567 g of 30% wt/wt solution of MAO in toluene are loaded in a 20 L j acketed glass reactor, stirred by means of an anchor stirrer, and allowed to react at room temperature for about 1 hour under stirring.

After this time, 1.27 g of metallocene A-1 is added and dissolved under stirring for about 30 minutes.

The final solution is discharged from the reactor into a cylinder through a filter to remove eventual solid residues.

The composition of the solution resulted to be:

| Al (wt.%) | Zr (wt.%) | Al/Zr (mol ratio) | metallocene conc. (mg/l) |
|---|---|---|---|
| 1.72 | 0.0029 | 2001 | 137 |

**Polymerization of the butene-1 copolymer.** The polymerization was carried out in two stirred reactors operated in series, in which liquid butene-1 constituted the liquid medium. The catalyst system described above was fed in both reactors. The polymerization conditions are reported in Table 1. The butene-1 copolymer was recovered as melt from the solution and cut in pellets. The copolymer was further characterized and the data are reported in Table 2.

Table 1

| First reactor | | |
|---|---|---|
| Temperature | °C | 75 |
| H2 in liquid phase | molar ppm | 3248 |
| C2 in liquid phase | wt.% | 0.3 |
| Mileage | Kg/gMe | 1485 |
| Split | wt.% | 60 |
| C2 content (A1) | wt.% | 1 |
| C2 content (A1) | mole% | 1.98 |
| Second reactor | | |
| Temperature | °C | 75 |
| H2 in liquid phase | molar ppm | 3248 |
| C2 in liquid phase | wt.% | 0.4 |
| Split | wt.% | 40 |
| C2 content (A1) | wt.% | 1 |
| C2 content (A1) | mole% | 1.98 |
| | | |
| Total mileage | Kg/gMe | 1539 |
| Total C2 content | wt.% | 1.0 |
| Total C2 content | mole% | 1.98 |
| Note: kg/gMe = kilograms of polymer per gram of metallocene A-1; Split = amount of polymer produced in the concerned reactor. | | |

Table 2

| | | PB-1 |
|---|---|---|
| MFR (190°C/2.16 Kg) | g/10min. | 1200 |
| Intrinsic viscosity (IV) | dl/g | 0.4 |
| Mw/Mn | | 2.1 |
| Mw | | 50,000 |
| TmII | °C | 81.9 |
| TmI | °C | 103 |
| Tg | °C | -10 |
| Viscosity (180°C) | mPa.s | 10,000 |
| Crystallinity | % | 58 |
| Density | g/cm$^3$ | 0.9090 |
| Flexural Modulus | MPa | 350 |
| Storage modulus at 23°C | MPa | 316 |

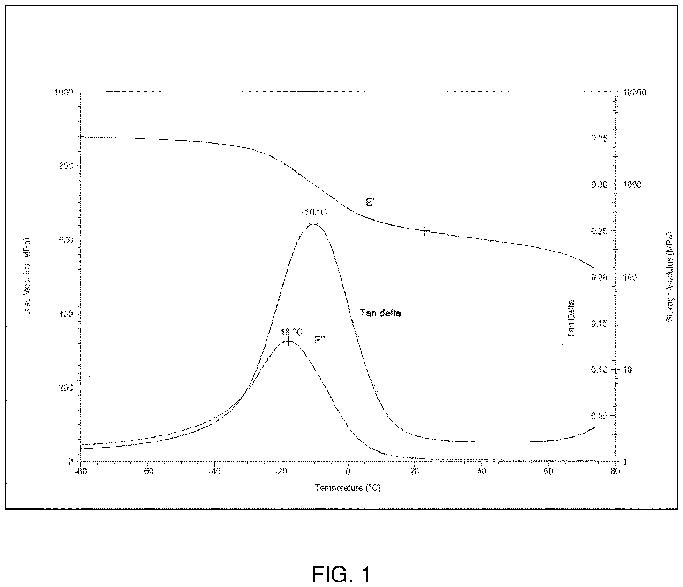

Figure 1 illustrates the variation of viscoelastic properties (E', E" and Tan $\delta$) of the butene-1 copolymer with the temperature measured by DMTA.

**EXAMPLE 1-3**

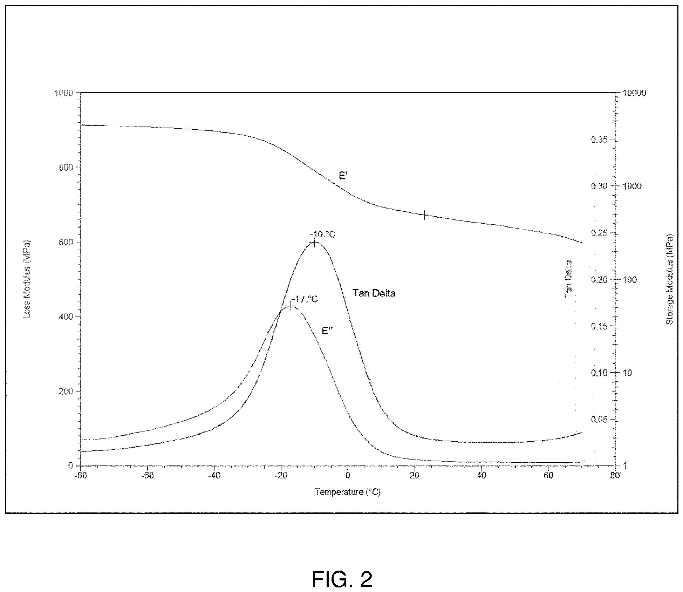

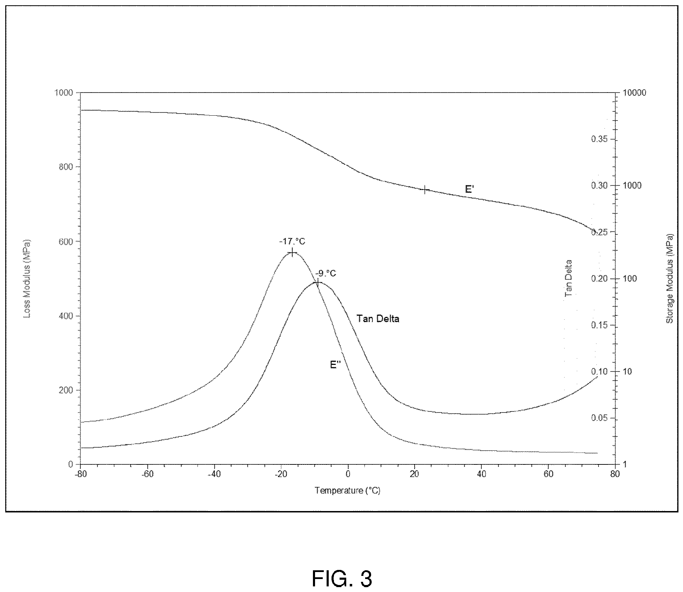

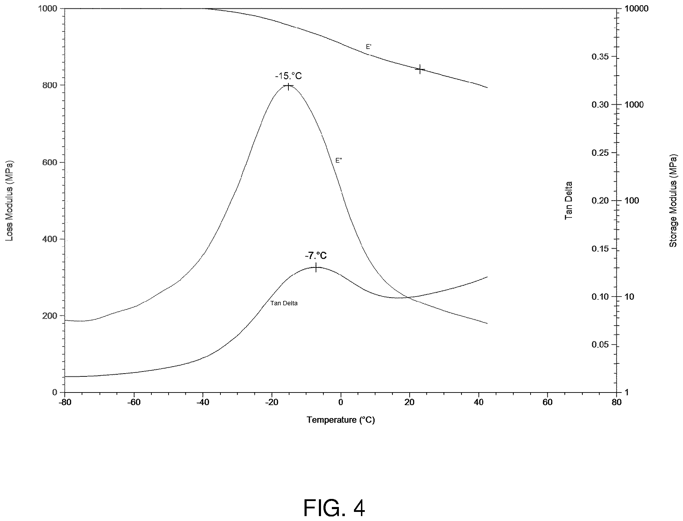

Filled polyolefin compositions were prepared by blending in the molten state the butene-1 copolymer described above and different amounts of calcium carbonate having particle size distribution in which d(10) is 1$\mu$m, d(50) is 9$\mu$m and d(90) is 40$\mu$m. The amount of component (A) and (B), the MFR values and storage modulus of the compositions of the examples are indicated in table 3. The variation of viscoelastic properties of the compositions with temperature is illustrated in Figures 2-4.

Table 3

|  |  | Example 1 | Example 2 | Example 3 |
|---|---|---|---|---|
| PB-1 | wt.% | 75 | 50 | 25 |
| CaCO$_3$ | wt.% | 25 | 50 | 75 |
| MFR (190°C/2.16 Kg) | g/10min. | 840 | 610 | 300 |
| Storage modulus 23°C | MPa | 489 | 896 | 2332 |

The filled polyolefin compositions were used to manufacture the secondary backing of a turfed tile carpet by extrusion coating the compositions of examples 1-3 to the underside of a carpet comprising polyamine yarn fixed into a polypropylene primary backing and latex as backcoat material. A minimum force was required to delaminate the primary and secondary backing.

**Claims**

1. A filled polyolefin composition comprising:

   (A) a copolymer of butene-1 with at least one comonomer selected from the group consisting of ethylene, propylene, C5-C10 alpha-olefins and mixtures thereof, having copolymerized comonomer content of 0.5-5.0 wt.%, Melt Flow Rate (MFR) values measured according to ISO 1133 (190°C, 2.16kg) of from 400 to 2,700 g/10min, a molecular weight distribution (Mw/Mn) lower than 4, X-ray crystallinity comprised in the range 25-60%, and
   (B) up to 80 wt.% of at least one inorganic filler,

   wherein the amounts of (A) and (B) are referred to the total weight of (A) + (B).

2. The filled polyolefin composition according to claim 1, wherein the butene-1 copolymer component (A) has a Melt Flow Rate MFR measured according to ISO 1133 (190°C, 2. 16kg) of from 600 to 2,500 g/10 min, preferably of from 800 to 2,000 g/lOmin.

3. The filled polyolefin composition according to claim 1 or 2, wherein the at least one comonomer is selected from ethylene, propylene, hexene-1, octene-1 and mixture thereof, preferably the at least one comonomer is ethylene.

4. The filled polyolefin composition according to any one of claims 1-3, wherein the butene-1 copolymer component (A) has a copolymerized comonomer content of 0.5-3.0 wt.%, preferably of 0.7-2.0 wt.%, more preferably of 0.7-1.5 wt.%.

5. The filled polyolefin composition according to any one of claims 1-4, wherein the butene-1 copolymer component (A) has at least one of the following additional features:

   (a) a molecular weight distribution (Mw/Mn) lower than 3; preferably lower than 2.5, the lower limit being of 1.5 in all cases; and/or
   (b) a weight average molecular weight Mw of from 30,000 to 140,000, preferably of from 30,000 to 80,000; and/or
   (c) melting point (TmII) lower than 110°C, preferably lower than 100°C, more preferably lower than 90°C; and/or
   (d) melting point (TmII) higher than 80°C; and/or
   (e) rotational (Brookfield) viscosity at 180°C (shear rate 100 s-1) of from 5,000 to 50,000 mPa.sec, in particular from 8,000 to 20,000 mPa.sec.

6. The filled polyolefin composition according to any one of claims 1-5, wherein the butene-1 copolymer component (A) has at least one of the following additional features:

(g) glass transition temperature (Tg) in the range from - 40°C to - 10°C, preferably from - 30°C to -10°C; and/or
(h) storage modulus at 23°C equal to or higher than 300 MPa.

7. The filled polyolefin composition according to any one of claims 1-6, wherein the at least one inorganic filler (B) is selected from the group consisting of carbonates of alkali metals or alkaline-earth metals, sulfates of alkali metals or alkaline-earth metals, hydroxides of alkali metals or alkaline-earth metals, silicate minerals, synthetic silica, synthetic zeolites, glass, carbon black, inorganic pigments and mixtures thereof.

8. The filled polyolefin composition according to any one of claims 1-7, wherein the at least one inorganic filler (B) is selected from the group consisting of calcium carbonate, magnesium carbonate, calcium sulfate, barium sulfate, magnesium hydroxides and mixtures thereof, preferably the inorganic filler (B) is calcium carbonate.

9. The filled polyolefin composition according to any one of claims 1-8, wherein the at least one inorganic filler (B) has a particle size distribution in which the d(90) value is equal to or lower than 300$\mu$m, preferably the inorganic filler (B) has a particle size distribution in which d(10) value is from 0.5 to 10 $\mu$m, the d(50) value is from 5 to 30 $\mu$m and d(90) value is from 30 to 300 $\mu$m.

10. The filled polyolefin composition according to any one of claims 1-9, comprising 10-80 wt.%, preferably 20-75 wt.%, of at the least one inorganic filler (B).

11. A method of manufacturing a carpet comprising a step of applying to the underside of a primary carpet backing at least one layer comprising the filled polyolefin composition according to any one of claims 1-10.

12. A carpet comprising at least one backing layer comprising the filled polyolefin composition as described in any one of claims 1-10.

13. The carpet according to claim 12, wherein the at least one backing layer has thickness ranging from 0.1 to 5.0 mm, preferably from 0.1 to 3.0 mm.

14. The carpet according to claim 12 or 13 comprising:

(i) a primary baking;
(ii) a backcoat material adhered on the backside of the primary backing; and
(iii) optionally, one or more secondary backing layers,

wherein at least one selected among the backcoat material (ii) and the one or more secondary backing layers (iii) comprises the filled polyolefin composition as described in any one of claims 1-10.

15. The carpet according to any one of claims 12-14 comprising:

(i) a primary backing;
(ii) a backcoat material adhered on the backside of the primary backing, comprising the filled polyolefin composition as described in any one of claims 1-10.

**Patentansprüche**

1. Gefüllte Polyolefinzusammensetzung, umfassend:

(A) ein Copolymer von Buten-1 mit mindestens einem Comonomer ausgewählt aus der Gruppe bestehend aus Ethylen, Propylen, $C_5$- bis $C_{10}$-alpha-Olefinen und Mischungen davon mit einem Gehalt an copolymerisiertem Comonomer von 0,5 bis 5,0 Gew.%, Werten der Schmelzflussrate (MFR), gemessen gemäß ISO 1133 (190 °C, 2,16 kg), von 400 bis 2700 g/10 min, einer Molekulargewichtsverteilung (Mw/Mn) kleiner als 4, Röntgenkristallinität im Bereich von 25 bis 60 %, und
(B) bis zu 80 Gew.% von mindestens einem anorganischen Füllstoff,

wobei die Mengen von (A) und (B) sich auf das Gesamtgewicht von (A) + (B) beziehen.

2. Gefüllte Polyolefinzusammensetzung nach Anspruch 1, wobei die Buten-1-Copolymer-komponente (A) eine Schmelzflussrate MFR, gemessen gemäß ISO 1133 (190 °C, 2,16 kg), von 600 bis 2500 g/10 min, vorzugsweise 800 bis 2000 g/10 min hat.

3. Gefüllte Polyolefinzusammensetzung nach Anspruch 1 oder 2, wobei das mindestens eine Comonomer ausgewählt ist aus Ethylen, Propylen, Hexen-1, Octen-1 und Mischung davon, wobei vorzugsweise das mindestens eine Comonomer Ethylen ist.

4. Gefüllte Polyolefinzusammensetzung nach einem der Ansprüche 1 bis 3, wobei die Buten-1-Copolymerkomponente (A) einen Gehalt an copolymerisiertem Comonomer von 0,5 bis 3,0 Gew.%, vorzugsweise 0,7 bis 2,0 Gew.%, bevorzugter 0,7 bis 1,5 Gew.% hat.

5. Gefüllte Polyolefinzusammensetzung nach einem der Ansprüche 1 bis 4, wobei die Buten-1-Copolymerkomponente (A) mindestens eines der folgenden zusätzlichen Merkmale aufweist:

   (a) eine Molekulargewichtsverteilung (Mw/Mn) kleiner als 3, vorzugsweise kleiner als 2,5, wobei die Untergrenze in allen Fällen 1,5 ist; und/oder

   (b) ein durchschnittliches Molekulargewicht (Gewichtsmittel) Mw von 30.000 bis 140.000, vorzugsweise 30.000 bis 80.000; und/oder

   (c) einen Schmelzpunkt (TmII) kleiner als 110 °C, vorzugsweise kleiner als 100 °C, bevorzugter kleiner als 90 °C; und/oder

   (d) einen Schmelzpunkt (TmII) größer als 80 °C; und/oder

   (e) eine Rotationsviskosität (Brookfield) bei 180 °C (Scherrate 100 s$^{-1}$) von 5000 bis 50.000 mPas, insbesondere von 8000 bis 20.000 mPas.

6. Gefüllte Polyolefinzusammensetzung nach einem der Ansprüche 1 bis 5, wobei die Buten-1-Copolymerkomponente (A) mindestens eines der folgenden zusätzlichen Merkmale aufweist:

   (g) eine Glasübergangstemperatur (Tg) im Bereich von -40 °C bis -10 °C, vorzugsweise von -30 °C bis -10 °C; und/oder

   (h) einen Speichermodul bei 23 °C gleich oder höher als 300 MPa.

7. Gefüllte Polyolefinzusammensetzung nach einem der Ansprüche 1 bis 6, wobei der mindestens eine anorganische Füllstoff (B) ausgewählt ist aus der Gruppe bestehend aus Carbonaten von Alkalimetallen oder Erdalkalimetallen, Sulfaten von Alkalimetallen oder Erdalkalimetallen, Hydroxiden von Alkalimetallen oder Erdalkalimetallen, Silikatmineralien, synthetischem Siliciumdioxid, synthetischen Zeolithen, Glas, Ruß, anorganischen Pigmenten und Mischungen davon.

8. Gefüllte Polyolefinzusammensetzung nach einem der Ansprüche 1 bis 7, wobei der mindestens eine anorganische Füllstoff (B) ausgewählt ist aus der Gruppe bestehend aus Calciumcarbonat, Magnesiumcarbonat, Calciumsulfat, Bariumsulfat, Magnesiumhydroxiden und Mischungen davon, wobei der anorganische Füllstoff (B) vorzugsweise Calciumcarbonat ist.

9. Gefüllte Polyolefinzusammensetzung nach einem der Ansprüche 1 bis 8, wobei der mindestens eine anorganische Füllstoff (B) eine Partikelgrößenverteilung hat, in der der d(90)-Wert gleich oder kleiner als 300 $\mu$m ist, wobei der anorganische Füllstoff (B) vorzugsweise eine Partikelgrößenverteilung hat, in der der d(10)-Wert 0,5 bis 10 $\mu$m, der d(50)-Wert 5 bis 30 $\mu$m und der d(90)-Wert 30 bis 300 $\mu$m beträgt.

10. Gefüllte Polyolefinzusammensetzung nach einem der Ansprüche 1 bis 9, umfassend 10 bis 80 Gew.%, vorzugsweise 20 bis 75 Gew.% des mindestens einen anorganischen Füllstoffs (B).

11. Verfahren zur Fertigung eines Teppichs, umfassend einen Schritt des Aufbringens von mindestens einer Schicht, die die gefüllte Polyolefinzusammensetzung gemäß einem der Ansprüche 1 bis 10 umfasst, auf die Unterseite eines primären Teppichrückens.

12. Teppich, umfassend mindestens eine Rückenschicht, die die gefüllte Polyolefinzusammensetzung wie in einem der Ansprüche 1 bis 10 beschrieben umfasst.

**13.** Teppich nach Anspruch 12, wobei die mindestens eine Rückenschicht eine Dicke im Bereich von 0,1 bis 5,0 mm, vorzugsweise 0,1 bis 3,0 mm hat.

**14.** Teppich nach Anspruch 12 oder 13, umfassend:

(i) ein primären Rücken;
(ii) ein Rückseitenbeschichtungsmaterial, das an die Rückseite des primären Rückens geklebt ist; und
(iii) gegebenenfalls eine oder mehrere sekundäre Rückenschichten,

wobei mindestens eines ausgewählt aus dem Rückseitenmaterial (ii) und der einen oder den mehreren sekundären Rückenschichten (iii) die gefüllte Polyolefinzusammensetzung wie in einem der Ansprüche 1 bis 10 beschrieben umfasst.

**15.** Teppich nach einem der Ansprüche 12 bis 14, umfassend:

(i) ein primären Rücken;
(ii) ein Rückseitenmaterial, das an die Rückseite des primären Rückens geklebt ist, umfassend die gefüllte Polyolefinzusammensetzung wie in einem der Ansprüche 1 bis 10 beschrieben.

## Revendications

**1.** Composition polyoléfinique chargée comprenant :

(A) un copolymère de butène-1 avec au moins un comonomère choisi dans le groupe constitué par l'éthylène, le propylène, les alpha-oléfines en C5-C10 et leurs mélanges, présentant une teneur en comonomères copolymérisés de 0,5 à 5,0 % en poids, des valeurs d'indice de fluidité à chaud (MFR), mesurées selon la norme ISO 1133 (190 °C, 2,16 kg), de 400 à 2700 g/10 min, une distribution des poids moléculaires (Mw/Mn) inférieure à 4, une cristallinité par rayons X située dans la plage de 25 à 60 % et
(B) jusqu'à 80 % en poids d'au moins une charge inorganique,

les quantités de (A) et (B) se rapportant au poids total de (A) + (B).

**2.** Composition polyoléfinique chargée selon la revendication 1, le constituant copolymère de butène-1 (A) présentant un indice de fluidité à chaud MFR, mesuré selon la norme ISO 1133 (190 °C, 2,16 kg), de 600 à 2500 g/10 min, de préférence de 800 à 2000 g/10 min.

**3.** Composition polyoléfinique chargée selon la revendication 1 ou 2, ledit au moins un comonomère étant choisi parmi l'éthylène, le propylène, l'hexène-1, l'octène-1 et leur mélange, de préférence ledit au moins un comonomère étant l'éthylène.

**4.** Composition polyoléfinique chargée selon l'une quelconque des revendications 1 à 3, le constituant copolymère de butène-1 (A) présentant une teneur en comonomères copolymérisés de 0,5 à 3,0 % en poids, de préférence de 0,7 à 2,0 % en poids, plus préférablement de 0,7 à 1,5 %.

**5.** Composition polyoléfinique chargée selon l'une quelconque des revendications 1 à 4, le constituant copolymère de butène-1 (A) présentant au moins l'une des caractéristiques supplémentaires suivantes :

(a) une distribution des poids moléculaires (Mw/Mn) inférieure à 3 ; de préférence inférieure à 2,5, la limite inférieure étant de 1,5 dans tous les cas ; et/ou
(b) un poids moléculaire moyen en poids Mw de 30.000 à 140.000, de préférence de 30.000 à 80.000 ; et/ou
(c) un point de fusion (TmII) inférieur à 110 °C, de préférence inférieur à 100 °C, plus préférablement inférieur à 90 °C ; et/ou
(d) un point de fusion (TmII) supérieur à 80 °C ; et/ou
(e) une viscosité en rotation (Brookfield) à 180 °C (taux de cisaillement 100 s-1) de 5000 à 50.000 mPa.s, en particulier de 8000 à 20.000 mPa.s.

**6.** Composition polyoléfinique chargée selon l'une quelconque des revendications 1 à 5, le constituant copolymère de butène-1 (A) présentant au moins l'une des caractéristiques supplémentaires suivantes :

(g) une température de transition vitreuse (Tg) dans la plage de-40 °C à-10 °C, de préférence de -30 °C à -10 °C ; et/ou
(h) un module de conservation à 23 °C égal ou supérieur à 300 MPa.

**7.** Composition polyoléfinique chargée selon l'une quelconque des revendications 1 à 6, ladite au moins une charge inorganique (B) étant choisie dans le groupe constitué par les carbonates de métaux alcalins ou de métaux alcalino-terreux, les sulfates de métaux alcalins ou de métaux alcalino-terreux, les hydroxydes de métaux alcalins ou de métaux alcalino-terreux, les minéraux de silicate, la silice synthétique, les zéolites synthétiques, le verre, le noir de carbone, les pigments inorganiques et leurs mélanges.

**8.** Composition polyoléfinique chargée selon l'une quelconque des revendications 1 à 7, ladite au moins une charge inorganique (B) étant choisie dans le groupe constitué par le carbonate de calcium, le carbonate de magnésium, le sulfate de calcium, le sulfate de baryum, les hydroxydes de magnésium et leurs mélanges, de préférence la charge inorganique (B) étant du carbonate de calcium.

**9.** Composition polyoléfinique chargée selon l'une quelconque des revendications 1 à 8, ladite au moins une charge inorganique (B) présentant une distribution des grosseurs de particule dans laquelle la valeur d(90) est égale ou inférieure à 300 $\mu$m, de préférence la charge inorganique (B) présentant une distribution des grosseurs de particule dans laquelle la valeur d(10) est de 0,5 à 10 $\mu$m, la valeur d(50) est de 5 à 30 $\mu$m et la valeur d(90) est de 30 à 300 $\mu$m.

**10.** Composition polyoléfinique chargée selon l'une quelconque des revendications 1 à 9, comprenant 10 à 80 % en poids, de préférence 20 à 75 % en poids, d'au moins une charge inorganique (B).

**11.** Procédé de fabrication d'un tapis comprenant une étape d'application, sur la face inférieure d'un support primaire de tapis, d'au moins une couche comprenant la composition polyoléfinique chargée selon l'une quelconque des revendications 1 à 10.

**12.** Tapis comprenant au moins une couche support comprenant la composition polyoléfinique chargée telle que décrite dans l'une quelconque des revendications 1 à 10.

**13.** Tapis selon la revendication 12, ladite au moins une couche support présentant une épaisseur située dans la plage de 0,1 à 5,0 mm, de préférence de 0,1 à 3,0 mm.

**14.** Tapis selon la revendication 12 ou 13, comprenant :

(i) une support primaire ;
(ii) un matériau de revêtement arrière collé sur la face arrière du support primaire ; et
(iii) éventuellement, une ou plusieurs couches support secondaires,

au moins un élément choisi parmi le matériau de revêtement arrière (ii) et ladite une ou lesdites plusieurs couches support secondaires (iii) comprenant la composition polyoléfinique chargée telle que décrite dans l'une quelconque des revendications 1 à 10.

**15.** Tapis selon l'une quelconque des revendications 12 à 14 comprenant :

(i) un support primaire ;
(ii) un matériau de revêtement arrière collé sur la face arrière du support primaire, comprenant la composition polyoléfinique chargée telle que décrite dans l'une quelconque des revendications 1 à 10.

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015074830 A
- US 5929145 A
- US 5416151 A
- WO 2018007280 A
- WO 2004099269 A
- WO 2006045687 A
- WO 0147939 A